# EUROPEAN PATENT SPECIFICATION

(11) **EP 0 440 668 B1**
(45) Date of publication and mention of the grant of the patent: **19.01.1994**
(21) Application number: 89910130.7
(22) Date of filing: 25.08.1989
(51) Int. Cl.: G01D 5/26

(54) **A SENSING METHOD EMPLOYING A FIBRE OPTIC SENSOR SYSTEM**
PRÜFVERFAHREN UNTER VERWENDUNG EINES OPTISCHEN FASERPRÜFSYSTEMS
PROCEDE DE DETECTION UTILISANT UN SYSTEME DE CAPTEUR A FIBRE OPTIQUE

(43) Date of publication of application: 14.08.1991
(73) Proprietor: GEC-MARCONI LIMITED, Stanmore, Middlesex HA7 4LY (GB)
(72) Inventor: Lamb, Christopher, Gillingham Dorset SP8 4EE (GB); Dakin, John Philip, East Wellow Romsey Hants. SO51 6BN (GB)
(74) Representative: Elliott, Frank Edward
(86) International application number: GB8901017
(87) International publication number: WO9102946

(56) References cited:
- EP-A- 0 326 199

## Description

The present invention relates to a method for sensing changes in environmental parameters and to a fibre optic sensor system for detecting those changes.

A number of fibre optic sensor systems have been proposed for measuring changes in environmental parameters, e.g. sound waves, temperature etc., using the phase modulation that they produce in the fibre. (EP-A-0 326 199).

Reflectometric systems generally use sections of the fibre separated from each other by semi-reflecting elements. These elements are often difficult to engineer, and this technique means that the length and position of sensing sections have to be determined at manufacture. Arrays of sensors consist of a number of discrete elements joined in series.

It is an object of the present invention to provide a system in which the semi-reflecting splice requirement may be eliminated and for enabling interferometric interrogation of a known section of optical fibre within a longer length.

According to the present invention, there is provided a method of detecting changes in environmental parameters using the intrinsic back-scattering properties of continuous optical fibre, comprising transmitting pulses of light which are frequency shifted in relation to one another along an optical fibre, at least one pulse of light having a first frequency and a subsequently transmitted pulse of light having a second frequency, the pulse of light having the first frequency being scattered or reflected from a first location along the optical fibre and combined, after guidance back to a detecting element, with light back-scattered by the second pulse from a time-dependent second location along the optical fibre to produce, on said detecting element, an interference signal, detecting the interference signal and processing the signal to derive, therefrom, information representative of changes in environmental parameters, affecting at least part of the length of optical fibre between said first and second locations.

In one embodiment, the first location is at the end of the optical fibre, the light pulse having the first frequency being reflected back therefrom to combine with the light scattered by the second pulse at the second location, the carrier frequency of the interference signal being phase modulated in dependence upon any phase changes that occurred to the pulse of light having the first frequency during its passage long the length of the optical fibre between said second location and the end of the fibre.

In another embodiment, two pulses each having the first frequency are transmitted along the fibre, the two pulses being reflected from the end of the fibre and crossing the pulse having the second frequency at two different locations along the fibre thereby producing two interference signals at the detector, and subtracting the demodulated outputs derived from the two interference signals to derive information representative of changes in environmental parameters affecting the length of optical fibre between said two different locations.

In a further embodiment, scattered reflected light from the pulse having the first frequency is combined with scattered reflected light from the light pulse having the second frequency to provide a continuous interference signal, the interference signal being gated at appropriate times to provide signals at the detector which can be processed to derive information representative of changes in environmental parameters affecting a length of optical fibre between desired first and second locations.

In another aspect of the invention, there is provided an optical sensor system comprising a continuous optical fibre, means for providing pulses of light which are frequency shifted in relation to one another and for transmitting those pulses along the optical fibre whereby in operation a pulse of light having a first frequency is scattered or reflected from a first location along the optical fibre and is combined with light scattered by a transmitted second pulse having a second frequency from a second location along the optical fibre to produce an interference signal means being provided for detecting the interference signal and for processing the interference signal to derive information relating to changes in environmental parameters affecting at least part of the length of the optical fibre between said first and second locations.

In a preferred embodiment, means is provided for changing the time separation of the frequency shifted pulses thereby enabling a sensing section of the fibre to be varied.

The present invention will be described further, by way of examples, with reference to the accompanying drawings, in which:-
Figure 1 illustrates schematically an embodiment of the fibre optic sensor system according to the present invention:
Figure 2 illustrates schematically a fibre optic sensor system according to a second embodiment of the present invention:
Figure 3 illustrates the relationship between returned heterodyne pulses from the sensor system of Figure 2: and,
Figure 4 illustrates schematically a third embodiment of a fibre optic sensor system according to the present invention.

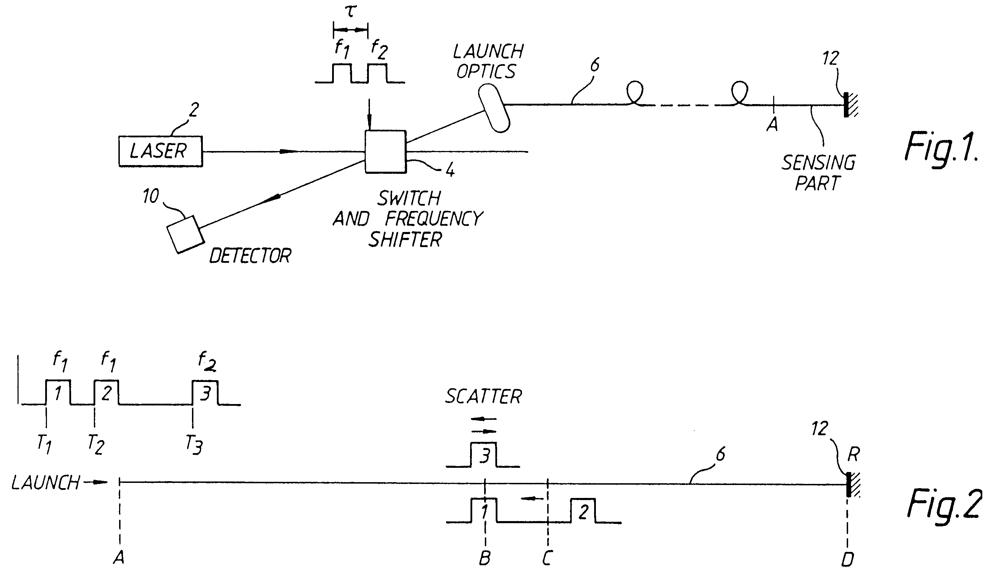

Referring to Figure 1, there is illustrated a typical sensor system consisting of a laser source 2, a mechanism 4 to produce pulses of light which can be frequency shifted in relation to each other (e.g. an acoustic optic modulator), a continuous length of optical fibre 6 which comprises a portion serving as the sensing element, and a light receiving element (e.g. a photodiode) 10.

When a pulse of light is launched down the fibre 6 some of it will be scattered and returned up the fibre; the time of return of this scattered light is representative of a certain point along the length of the fibre (this is the basis of the well known principle of optical time domain reflectometry). When the launch pulse reaches the end of the continuous fibre (or some other discontinuity, if it exists, there will be a large reflection returned due to the Fresnel reflection at a glass/air boundary 12. If a second pulse is following the first one, at a certain point A in the fibre 6, the returning Fresnel reflection of the first pulse will be time coincident on a light detector, 10, with the returning back-scattering from the second pulse; this will produce an interference return signal on the light detector 10; this interference return signal being at the frequency difference of the two pulses. This "carrier" frequency will be phase modulated by the phase changes that occur in the length of fibre between the cross over point A of the two pulses and the end 12 of the fibre 6. In effect this portion of the length of the fibre 6 constitutes the sensing arm of an interferometer. Any phase changes that occur in the fibre 6 up to the cross over point A will be common to both the scattered light and the reflected light and so will not affect the carrier but any phase changes to which the first pulse of light is subjected, between the point A and the end 12 of the fibre, will be detected and constitute a measure of a parametric change to which this portion of the fibre has been subjected.

It can be seen that by changing the time separation of the two pulses, the position A and hence the length of the sensing section of the fibre 6 can be varied, in fact the whole length of fibre 6 can be made the sensor, provided that the coherence length of the laser 2 is sufficient.

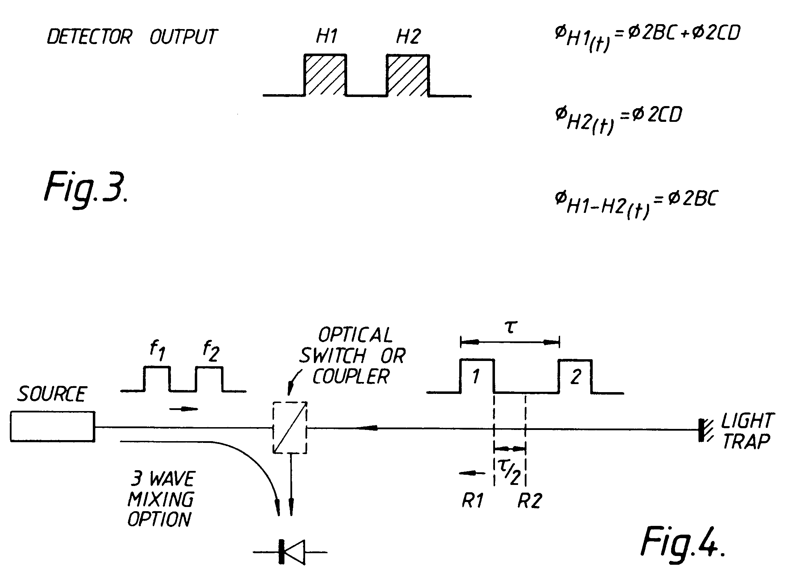

The first embodiment is limited by the fact that the sensing portion of the fibre has to extend to the end of the fibre 6, with only the starting position being variable in dependence upon the time difference between the launch of the two pulses. The system can be modified to enable sensing to occur over any region of the fibre 6. This technique is described with reference to Figure 2. The physical system is identical to the first case but in this instance three pulses are launched into the fibre 6, pulses 1 and 2 at a frequency F1 and pulse 3 at a frequency F2. The first two pulses are reflected from the end 12 of the fibre 6 and cross the third pulse at different locations B, C, in the fibre producing two heterodyne pulses at the detector (Figure 3). It can be seen that each heterodyne contains phase information consistent with the path that its constituent pulses have travelled, part of this information is common to all three of the pulses; part of this information is common to both first launched pulses, and hence by subtracting the demodulated outputs from each other the non-common part (BC) can be obtained. It can also be seen that by altering the pulse timing, the position and length of the portion BC can be altered, to interrogate any desired section of the fibre.

In a third embodiment of this technique, only the back-scattering from two pulses launched into the fibre is used. Figure 4 shows this configuration.

In this embodiment, the return signal will be much weaker than in the previous embodiment but the detection sensitivity may be improved using a 3-wave mixing technique. This technique could also be used to improve the detection sensitivity in the previous embodiments.

The optical sensor system of the present invention has the advantage that no special preparation of the fibre is required; it can, for example, be used to measure environmental effects in continuous fibre cables previously installed for other purposes e.g. communications.

Although the present invention has been described with respect to specific embodiments thereof, it is to be understood that modifications and variations can be made within the scope of the invention as claimed.

## Claims

1. A method of detecting changes in environmental parameters comprising transmitting pulses of light which are frequency shifted in relation to one another along an optical fibre, at least one pulse of light having a first frequency and a subsequently transmitted pulse of light having a second frequency, the pulse of light having the first frequency being scattered or reflected from a first location along the optical fibre and combined, after guidance back to a detecting element (10) with light scattered by the second pulse from a second location along the optical fibre (6) to produce, on said detection element, an interference signal, detecting the interference signal and processing the signal to derive, therefrom, information representative of changes in environmental parameters, affecting at least part of the length of optical fibre between said first and second locations, characterised in that the injected pulses are scattered by the intrinsic back scattering properties of the optical fibre (6) irrespective of discontinuities, if any, of the optical fibre, and the locations are determined in a time dependent manner.

2. A method of detecting changes in environmental parameters as claimed in claim 1 characterised in that said first location is at the remote end (12) of the optical fibre (6), the light pulse having the first frequency being reflected back therefrom to combine with the light back-scattered by the second pulse at the time-dependent second location, the carrier frequency of the interference signal being phase modulated in dependence upon any phase changes that occurred to the pulse of light having the first frequency during its passage along the length of the optical fibre between said second location and the end of the fibre.

3. A method of detecting changes in environmental parameters as claimed in claim 1 characterised in that two time-separated pulses each having the first frequency are transmitted along the fibre (6), the two first frequency pulses being reflected from the end (12) of the fibre and crossing the pulse having the second frequency at two different locations (B and C) along the fibre (6) thereby producing two interference signals at the detector (10), and subtracting the demodulated outputs derived from the two interference signals to derive information representative of changes in environmental parameters affecting the length of optical fibre (6) between said two different locations (B and C).

4. A method of detecting changes in environmental parameters as claimed in claim 1 characterised in that return scattered light from the light pulse having the first frequency is combined with return back-scattered light from the light pulse having the second frequency to provide, at the detecting means (10), a continuous interference signal, the interference signal being gated at appropriate times to provide signals at the detector which can be processed to derive information representative of changes in environmental parameters affecting a length of optical fibre (6) between desired first and second locations.

5. An optical sensor system comprising an optical fibre (6), means (2, 4) for providing pulses of light which are frequency shifted in relation to one another and for transmitting those pulses along the optical fibre (6) characterised in that, in operation, a pulse of light having a first frequency is scattered or reflected from a first location along a continuous optical fibre (6) and is combined with light back-scattered by a transmitted second pulse having a second frequency from a second time-dependent location along the optical fibre (6) to produce an interference signal, means (10) being provided for detecting the interference signal and for processing the interference signal to derive information relating to change in environmental parameters affecting at least part of the length of the optical fibre (6) between said first and second locations.

6. An optical sensor as claimed in claim 5 characterised in that means (4) is provided for changing the time separation of the frequency shifted pulses thereby enabling a sensing section (B, C) of the fibre to be varied.

## Patentansprüche

1. Ein Verfahren zum Nachweis von Änderungen in Umgebungsparametern, das umfaßt, daß Lichtpulse, welche in bezug zueinander frequenzverschoben sind, längs einer optischen Faser übertragen werden, wobei zumindest ein Lichtpuls eine erste Frequenz hat und ein nachfolgend übertragener Lichtpuls eine zweite Frequenz hat, der Lichtpuls mit der ersten Frequenz aus einem ersten Ort längs der optischen Faser gestreut oder reflektiert wird und nach der Führung zurück zu einem nachweisenden Element (10) mit gestreutem Licht von dem zweiten Puls, das aus einem zweiten Ort längs der optischen Faser (6) gestreut wird, kombiniert wird, um auf dem Nachweiselement ein Interferenzsignal zu erzeugen, das Interferenzsignal nachgewiesen wird und das Signal verarbeitet wird, um daraus Information herzuleiten, die Änderungen in Umgebungsparametern darstellt, die zumindest einen Teil der Länge der optischen Faser zwischen den ersten und zweiten Orten beeinflußen, dadurch gekennzeichnet, daß die injizierten Pulse durch die intrinsischen Rückstreueigenschaften der optischen Faser (6) unabhängig von Diskontinuitäten, falls überhaupt, der optischen Faser gestreut werden und die Orte in einer zeitabhängigen Weise bestimmt werden.

2. Ein Verfahren zum Nachweis von Änderungen in Umgebungsparametern nach Anspruch 1, dadurch gekennzeichnet, daß der erste Ort an dem entfernten Ende (12) der optischen Faser (6) ist, wobei der Lichtpuls mit der ersten Frequenz davon zurückreflektiert wird, um mit dem rückgestreuten Licht von dem zweiten Puls an dem zeitabhängigen zweiten Ort zu kombinieren, wobei die Trägerfrequenz des Interferenzsignals phasenmoduliert in Abhängigkeit von allen Phasenänderungen ist, die dem Lichtpuls mit der ersten Frequenz während seines Durchtritts längs der Länge der optischen Faser zwischen dem zweiten Ort und dem Ende der Faser aufgetreten sind.

3. Ein Verfahren zum Nachweis von Änderungen in Umgebungsparametern nach Anspruch 1, dadurch gekennzeichnet, daß zwei zeitgetrennte Pulse, die jeder die erste Frequenz haben, längs der Faser (6) übertragen werden, die zwei Pulse erster Frequenz von dem Ende (12) der Faser reflektiert werden und den Puls mit der zweiten Frequenz an zwei verschiedenen Orten (B und C) längs der Faser (6) kreuzen, wodurch zwei Interferenzsignale bei dem Detektor (10) erzeugt werden, und die demodulierten Ausgaben, die aus den zwei Interferenzsignalen hergeleitet werden, subtrahiert werden, um Information herzuleiten, die Änderungen in Umgebungsparametern darstellt, die die Länge der optischen Faser (6) zwischen zwei verschiedenen Orten (B und C) beeinflussen.

4. Ein Verfahren zum Nachweis von Änderungen in Umgebungsparametern nach Anspruch 1, dadurch gekennzeichnet, daß rückläufig gestreutes Licht aus dem Lichtpuls mit der ersten Frequenz mit rückläufig rückgestreutem Licht aus dem Lichtpuls mit der zweiten Frequenz kombiniert wird, um an dem Nachweismittel (10) ein kontinuierliches Interferenzsignal zu erzeugen, wobei das Interferenzsignal bei geeigneten Zeiten getastet wird, um Signale an dem Detektor vorzusehen, welche verarbeitet werden können, um Information herzuleiten, die Änderungen in Umgebungsparametern darstellt, die eine Länge der optischen Faser (6) zwischen gewünschten ersten und zweiten Orten beeinflußen.

5. Ein optisches Sensorsystem mit einer optischen Faser (6), einem Mittel (2, 4), um Lichtpulse vorzusehen, welche in bezug zueinander frequenzverschoben sind, und diese Pulse längs der optischen Faser (6) zu übertragen, dadurch gekennzeichnet, daß im Betrieb ein Lichtpuls mit einer ersten Frequenz aus einem ersten Ort längs einer durchgehenden optischen Faser (6) gestreut oder reflektiert wird und mit rückgestreutem Licht durch einen zweiten übertragenen Puls mit einer zweiten Frequenz aus einem zweiten zeitabhängigen Ort längs der optischen Faser (6) kombiniert wird, um ein Interferenzsignal zu erzeugen, wobei ein Mittel (10) vorgesehen ist, um das Interferenzsignal nachzuweisen und das Interferenzsignal zu verarbeiten, um Information herzuleiten, die sich auf die Änderung in den Umgebungsparametern bezieht, die zumindest den Teil der Länge der optischen Faser (6) zwischen den ersten und zweiten Orten beeinflußt.

6. Ein optischer Sensor nach Anspruch 5, dadurch gekennzeichnet, daß ein Mittel (4) vorgesehen ist, um die Zeittrennung der frequenzverschobenen Pulse zu ändern, wodurch ermöglicht wird, einen nachweisenden Bereich (B, C) der Faser zu variieren.

## Revendications

1. Procédé de détection de modifications de paramètres environnementiels comprenant la transmission d'impulsions lumineuses qui sont décalées en fréquence les unes par rapport aux autres le long d'une fibre optique, au moins une impulsion lumineuse présentant une première fréquence et une impulsion lumineuse transmise ensuite présentant une seconde fréquence, l'impulsion lumineuse présentant la première fréquence étant diffusée ou réfléchie depuis un premier emplacement le long de la fibre optique et étant combinée, après guidage en retour jusqu'à un élément de détection (10), à de la lumière diffusée par la seconde impulsion depuis un second emplacement le long de la fibre optique (6) afin de produire, sur ledit élément de détection, un signal d'interférence, la détection du signal d'interférence et le traitement du signal pour en dériver une information représentative de variations de paramètres environnementiels, l'affectation d'au moins une partie de la longueur de fibre optique entre lesdits premier et second emplacements, caractérisé en ce que les impulsions injectées sont diffusées par les propriétés de diffusion de retour intrinsèque de la fibre optique (6) indépendamment de discontinuités éventuelles de la fibre optique et en ce que les emplacements sont déterminés en fonction du temps.

2. Procédé de détection de variations de paramètres environnementiels selon la revendication 1, caractérisé en ce que ledit premier emplacement se trouve à une extrémité éloignée (12) de la fibre optique (6), l'impulsion lumineuse présentant la première fréquence étant réfléchie en retour depuis celle-ci pour être combinée avec la lumière diffusée en retour par la seconde impulsion au second emplacement dépendant du temps, la fréquence de porteuse du signal d'interférence étant modulée en phase en fonction de quelconques variations de phase qui se produisent quant à l'impulsion lumineuse présentant la première fréquence pendant son passage le long de la longueur de la fibre optique entre ledit second emplacement et l'extrémité de la fibre.

3. Procédé de détection de variations de paramètres environnementiels selon la revendication 1, caractérisé en ce que deux impulsions séparées temporellement dont chacune présente la première fréquence sont transmises le long de la fibre (6), les deux impulsions à la première fréquence étant réfléchies depuis l'extrémité (142) de la fibre et croisant l'impulsion présentant la seconde fréquence en deux emplacements différents (B et C) le long de la fibre (6), d'où la production ainsi de deux signaux d'interférence au niveau du détecteur (10), et en ce que la soustraction des sorties démodulées dérivées des deux signaux d'interférence permet de dériver une information représentative de variations de paramètres environnementiels affectant la longueur de la fibre optique (6) entre les deux dits emplacements différents (B et C).

4. Procédé de détection de variations de paramètres environnementiels selon la revendication 1, caractérisé en ce que de la lumière diffusée en retour en provenance de l'impulsion lumineuse présentant la première fréquence est combinée à de la lumière diffusée en retour en provenance de l'impulsion lumineuse présentant la seconde fréquence pour produire, au niveau du moyen de détection (10), un signal d'interférence continu, le signal d'interférence étant soumis à une logique de porte à des instants appropriés afin de produire des signaux au niveau du détecteur qui peuvent être traités pour dériver une information représentative de variations de paramètres environnementiels affectant une longueur de fibre optique (6) entre des premier et second emplacements souhaités.

5. Système de détecteur optique comprenant une fibre optique (6), un moyen (2, 4) pour produire des impulsions lumineuses qui sont décalées en fréquence les unes par rapport aux autres et pour transmettre ces impulsions le long de la fibre optique (6), caractérisé en ce que, en fonctionnement, une impulsion lumineuse présentant une première fréquence est diffusée ou réfléchie depuis un premier emplacement le long d'une fibre continue (6) et est combinée à de la lumière diffusée en retour par une seconde impulsion transmise présentant une seconde fréquence depuis un second emplacement dépendant du temps le long de la fibre optique (6) afin de produire un signal d'interférence, un moyen (10) étant prévu pour détecter le signal d'interférence et pour traiter le signal d'interférence afin de dériver une information concernant la variation des paramètres environnementiels affectant au moins une partie de la longueur de la fibre optique (6) entre lesdits premier et second emplacements.

6. Détecteur optique selon la revendication 5, caractérisé en ce qu'un moyen (4) est prévu pour modifier la séparation temporelle des impulsions décalées en fréquence pour ainsi permettre la variation d'une section de détection (B, C) de la fibre.
